# EUROPEAN PATENT APPLICATION

(11) **EP 4 725 293 A1**
(43) Date of publication of application: **15.04.2026**
(21) Application number: 24822293.7
(22) Date of filing: 04.03.2024
(51) Int. Cl.: A01D 75/18, A01D 34/00

(54) **ANTI-SLIP APPARATUS FOR LAWN MOWER, LAWN MOWER AND LAWN MOWER WITH MULTIPLE SAFETY PROTECTION**

(30) Priority: 15.06.2023 CN 202321538880 U; 10.10.2023 CN 202322739569 U
(71) Applicant: Shenzhen Zongguan Innovation Co., Ltd, Shenzhen, Guangdong 518000 (CN)
(72) Inventor: SONG, Shaojie, Shenzhen, Guangdong 518000 (CN); CHEN, Yiqi, Shenzhen, Guangdong 518000 (CN); WU, Gengyu, Shenzhen, Guangdong 518000 (CN); GAN, Shuai, Shenzhen, Guangdong 518000 (CN)
(74) Representative: Michalski Hüttermann & Partner Patentanwälte mbB
(86) International application number: PCT/CN2024/079987
(87) International publication number: WO 2024/255335

(57) **Abstract**

The present disclosure provides an anti-slip device for a lawn mower, a lawn mower, and a lawn mower with multiple safety protections. The anti-slip device includes a fixed bracket, a telescopic member, an electromagnetic member, and an elastic member. The fixed bracket is configured to connect to a frame of the lawn mower. An end of the fixed bracket adjacent to a wheel hub of the lawn mower is provided with a perforation. The telescopic member is arranged within the perforation. The electromagnetic member is arranged inside the fixed bracket. The elastic member is arranged between the telescopic member and the electromagnetic member. The electromagnetic member is configured to drive the telescopic member to retract along the perforation relative to the fixed bracket. The elastic member is configured to drive the telescopic member to extend along the perforation relative to the fixed bracket. When the telescopic member extends, a resisting end of the telescopic member resists the wheel hub to prevent slipping. Even on a slope, the lawn mower will not slip, ensuring safety during use.

## Description

### TECHNICAL FIELD

The present disclosure relates to the technical field of lawn mowers, and in particular, to an anti-slip device for a lawn mower, a lawn mower, and a lawn mower with multiple safety protections.

### BACKGROUND

A lawn mower is a machine configured to trim lawns and vegetation. Lawn mowers are widely used and can be applied in private gardens, public green spaces, and professional turf maintenance sites. Existing lawn mowers generally use a drive motor to provide power for the rotation of the wheels. In theory, when the drive motor is turned off, the wheels stop rotating and the lawn mower stops moving. However, due to inertia, the lawn mower often continues to move a certain distance, resulting in slipping. In addition, some turf environments are sloped surfaces with a certain gradient. When the lawn mower is on such a slope, due to its own gravity, the lawn mower may also slip. The occurrence of slipping increases the danger during the use of the lawn mower.

### SUMMARY

The main purpose of the present disclosure is to provide an anti-slip device for a lawn mower, a lawn mower, and a lawn mower with multiple safety protections. The anti-slip device for a lawn mower includes a fixed bracket, a telescopic member, an electromagnetic member, and an elastic member. The fixed bracket is configured to connect to a frame of the lawn mower. An end of the fixed bracket adjacent to a wheel hub of the lawn mower is provided with a perforation. The telescopic member is arranged within the perforation. The electromagnetic member is arranged inside the fixed bracket. The elastic member is arranged between the telescopic member and the electromagnetic member. The electromagnetic member is configured to drive the telescopic member to retract along the perforation relative to the fixed bracket. The elastic member is configured to drive the telescopic member to extend along the perforation relative to the fixed bracket. When the telescopic member extends, a resisting end of the telescopic member resists the wheel hub to prevent slipping.

Based on the same concept, the present disclosure also provides a lawn mower including the above anti-slip device for a lawn mower.

The present disclosure further provides a lawn mower with multiple safety protections, including a dynamic detection unit, a distance detection unit, and a protection unit. The dynamic detection unit is arranged on a front side of the lawn mower and is configured to detect dynamic obstacles in front of the lawn mower. Multiple distance detection units are provided, and the multiple distance detection units are arranged on the front side, left side, and/or right side of the lawn mower and are configured to detect a distance between the lawn mower and the obstacles. Multiple protection units are provided, and the multiple protection units are arranged on the front side, left side, and/or right side of the lawn mower and are configured to protect the lawn mower.

### BRIEF DESCRIPTION OF DRAWINGS

FIG. 1 is a structural schematic diagram according to some implementations of the present disclosure.
FIG. 2 is a partially enlarged structural schematic diagram of the connecting member at position A in FIG. 1.
FIG. 3 is a structural schematic diagram of the fixed bracket in some implementations of the present disclosure.
FIG. 4 is a circuit diagram of a drive motor connected to an electronic control board according to some implementations of the present disclosure.
FIG. 5 is another circuit diagram of a drive motor connected to an electronic control board according to some implementations of the present disclosure.
FIG. 6 is a structural schematic diagram of a lawn mower according to some implementations of the present disclosure.
FIG. 7 is a right side structural schematic diagram according to some implementations of the present disclosure.
FIG. 8 is a left side structural schematic diagram according to some implementations of the present disclosure.
FIG. 9 is a structural schematic diagram of the dynamic detection unit according to some implementations of the present disclosure.
FIG. 10 is a structural schematic diagram of the protection unit according to some implementations of the present disclosure.
FIG. 11 is a rear side structural schematic diagram according to some implementations of the present disclosure.
FIG. 12 is another rear side structural schematic diagram according to other implementations of the present disclosure.

### DETAILED DESCRIPTION

For ease of understanding the present disclosure, the following provides a more detailed description of the present disclosure in conjunction with the drawings and specific implementations. Preferred implementations of the present disclosure are shown in the drawings. However, the present disclosure can be implemented in many different forms and is not limited to the implementations described in this specification. On the contrary, the purpose of providing these implementations is to make the disclosure of the present disclosure more thorough and comprehensive.

It should be noted that, unless otherwise defined, all technical and scientific terms used in this specification have the same meaning as commonly understood by those skilled in the art to which the present disclosure belongs. The terms used in the specification of the present disclosure are only for the purpose of describing specific implementations and are not intended to limit the present disclosure. The term "and/or" as used in this specification includes any and all combinations of one or more of the associated listed items.

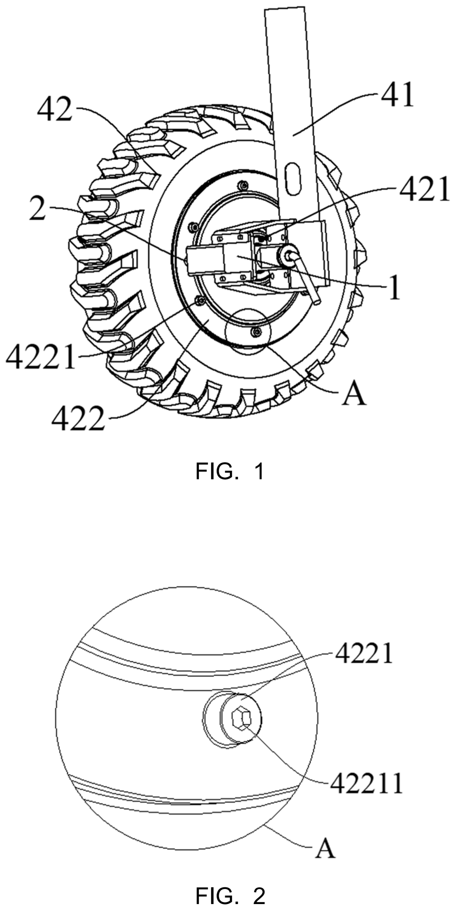

FIG. 1 to FIG. 6 show implementations of an anti-slip device for a lawn mower according to the present disclosure. The anti-slip device for a lawn mower includes a fixed bracket 1, a telescopic member 2, an electromagnetic member 3, and an elastic member. The fixed bracket 1 is configured to connect to a frame 41 of the lawn mower 4. An end of the fixed bracket 1 adjacent to a wheel hub 421 of the lawn mower 4 is provided with a perforation 11. The telescopic member 2 is arranged within the perforation 11. The electromagnetic member 3 is arranged inside the fixed bracket 1. The elastic member is arranged between the telescopic member 2 and the electromagnetic member 3. The electromagnetic member 3 is configured to drive the telescopic member 2 to retract along the perforation 11 relative to the fixed bracket 1. The elastic member is configured to drive the telescopic member 2 to extend along the perforation 11 relative to the fixed bracket 1. When the telescopic member 2 extends, a resisting end 21 of the telescopic member 2 resists the wheel hub 421, and due to the effect of friction, prevents the lawn mower 4 from slipping. Here, the end of the telescopic member 2 adjacent to the end surface of the wheel hub 421 is the resisting end 21.

When powered on, the electromagnetic member 3 is magnetic and drives the telescopic member 2 to retract along the perforation 11 relative to the fixed bracket 1. When powered off, the electromagnetic member 3 loses its magnetism, and the elastic member drives the telescopic member 2 to extend along the perforation 11 relative to the fixed bracket 1. When the telescopic member 2 extends, the resisting end 21 of the telescopic member 2 resists the wheel hub 421. Due to the effect of friction, the rotational inertia of the wheel 42 can be prevented, and the phenomenon of slipping is avoided. In addition, even when the lawn mower 4 is on a slope, it will not slip due to its own gravity, ensuring the safety of the lawn mower 4 during use.

In some implementations, the electromagnetic member 3 is connected to a drive motor of the lawn mower 4. The electromagnetic member 3 is powered on and off simultaneously with the drive motor. When the electromagnetic member 3 is powered on, the telescopic member 2 retracts, ensuring that when the drive motor is powered on and the wheel 42 starts to rotate, the telescopic member 2 can retract at the same time and does not block the rotation of the wheel 42. When the electromagnetic member 3 is powered off, the telescopic member 2 extends, ensuring that after the drive motor is powered off and the wheel 42 starts to rotate by inertia, the telescopic member 2 can extend at the same time, ensuring the timeliness of the telescopic cooperation of the telescopic member 2.

In some implementations, a rotating disk 422 is provided on the wheel hub 421. When the telescopic member 2 extends, the resisting end 21 resists the rotating disk 422 to prevent slipping. The rotating disk 422 is provided on the outer ring of the wheel hub 421. At the same rotational speed, the friction distance between the resisting end 21 and the rotating disk 422 is longer, and the friction between the resisting end 21 and the rotating disk 422 generates a greater braking force, resulting in a better effect of preventing the inertia rotation of the wheel 42.

In some implementations, an end surface of the rotating disk 422 adjacent to the telescopic member 2 is a rough surface. When the resisting end 21 resists the rotating disk 422, the rough surface can increase the friction force between the resisting end 21 and the rotating disk 422, resulting in a better anti-slip effect.

As shown in FIG. 2, in some implementations, a connecting member 4221 is provided on the end surface of the rotating disk 422 adjacent to the telescopic member 2. The connecting member 4221 is fixed at a corresponding position on the rotating disk 422. The connecting member 4221 is provided with a groove or through-hole 42211 adapted to the resisting end 21. That is, when the resisting end 21 is circular, triangular, or polygonal in shape, the connecting member 4221 is correspondingly provided with a groove or through-hole 42211 of a corresponding size and shape. This ensures that when the telescopic member 2 extends, the resisting end 21 can resist within the groove or through-hole 42211, locking the rotating disk 422 so that the wheel 42 no longer rotates. Whether due to inertia or its own gravity, slipping will not occur.

In some implementations, multiple connecting members 4221 are provided, uniformly and at intervals on the rotating disk 422. No matter what position the wheel 42 rotates to, when the telescopic member 2 extends, it can be engaged in the groove or through-hole 42211 of the nearest connecting member 4221, quickly stopping the rotation of the wheel 42 and preventing the lawn mower 4 from slipping.

In some implementations, multiple grooves or through-holes 42211 are provided at intervals on the end surface of the rotating disk 422 adjacent to the telescopic member 2. Here, the grooves or through-holes 42211 are integrally formed directly on the rotating disk 422, which is simpler and more convenient compared to providing a connecting member 4221 on the rotating disk 422. When the telescopic member 2 extends, the resisting end 21 resists within the groove or through-hole 42211 on the rotating disk 422 to prevent slipping.

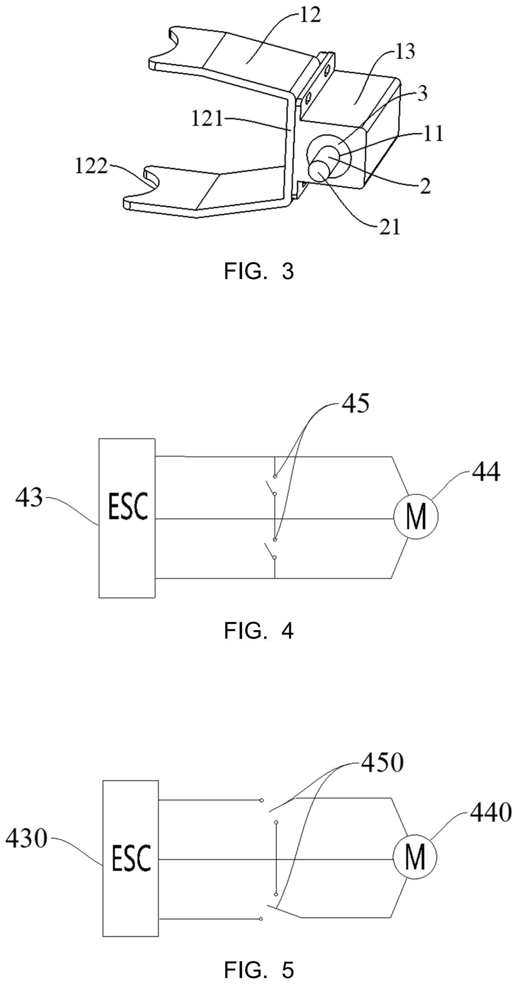

As shown in FIG. 3, in some implementations, the fixed bracket 1 includes an extending sub-frame 12 and a receiving sub-frame 13. The receiving sub-frame 13 is arranged at an outer end of the extending sub-frame 12. The extending sub-frame 12 is provided with a dedicated connecting side plate 121 for the receiving sub-frame 13 to be arranged thereon. The extending sub-frame 12 is configured to connect to the frame 41 of the lawn mower 4 and extend the position of the receiving sub-frame 13, ensuring that the telescopic member 2 on the receiving sub-frame 13 can correspond in position to the connecting member 4221 on the rotating disk 422. An opening 122 is also provided on the extending sub-frame, and the opening 122 is fitted with the tubular bracket of the frame 41 to ensure stable installation. The receiving sub-frame 13 is configured to arrange the telescopic member 2, the elastic member, and the electromagnetic member 3.

As shown in FIG. 4, in some implementations, the lawn mower 4 includes an electronic speed controller (ESC) 43. The electronic control board 43, commonly referred to as a motor controller, converts the input power supply into different voltages and outputs to the drive motor 44, so that the drive motor 44 generates different rotational speeds. The electronic control board 43 connects multiple phase wires of the drive motor 44. A switch 45 is connected between adjacent phase wires. The drive motor 44 can be a three-phase drive motor, and the switch 45 can be a relay. The three phase wires led out from the three-phase drive motor are directly connected to the electronic control board 43. Two relays are respectively provided between adjacent phase wires. When powered off, the relays short-circuit the three phase wires of the three-phase drive motor. The wiring of the three input terminals of the three-phase drive motor is connected to form a closed loop circuit. When the three-phase drive motor rotates, a reverse electromotive force is generated, and a current is generated in the short-circuited three-phase windings, thereby generating a reverse torque to prevent the three-phase drive motor from rotating.

As shown in FIG. 5, in some implementations, the electronic control board 430 and the drive motor 440 can be connected via a switch 450. That is, one end of the switch 450 is connected to one of the phase wires, and the other end is connected to the corresponding phase wire or to an adjacent phase wire. When the switch 450 connects the corresponding phase wire, the electronic control board 430 is connected to the drive motor 440. When the switch 450 connects adjacent phase wires, the phase wires of the drive motor 440 are short-circuited. The wiring of the input terminals of the drive motor 440 is connected together to form a closed loop circuit. When the drive motor 440 rotates, a reverse electromotive force is generated, and a current is generated in the short-circuited three-phase windings, thereby generating a reverse torque to prevent the drive motor 440 from rotating.

According to actual needs, the drive motor 44 can also be a motor with fewer or more phases, and the switch 45 can be a bidirectional switch, etc.

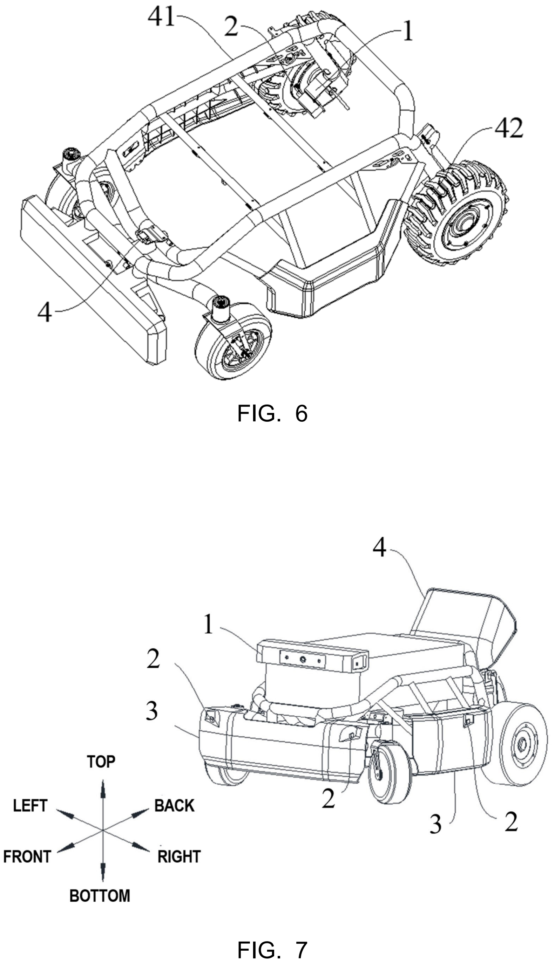

As shown in FIG. 6, based on the same concept, the present disclosure also provides a lawn mower 4, including the above anti-slip device for a lawn mower. According to actual needs, one or more anti-slip devices can be selectively provided on the lawn mower 4.

It can be seen that the present disclosure discloses an anti-slip device for a lawn mower and a lawn mower. When powered on, the electromagnetic member is magnetic and drives the telescopic member to retract along the perforation relative to the fixed bracket. When powered off, the electromagnetic member loses its magnetism, and the elastic member drives the telescopic member to extend along the perforation relative to the fixed bracket. When the telescopic member extends, the resisting end of the telescopic member presses against the wheel hub or the rotating disk. Due to the effect of friction, the lawn mower is prevented from slipping. Furthermore, by providing a connecting member with a groove or through-hole on the rotating disk, or directly providing a groove or through-hole on the rotating disk to lock the extended resisting end, it is ensured that even on a slope, the lawn mower will not slip. Furthermore, by providing a switch between the electronic control board and the phase wires of the drive motor, the phase wires are short-circuited when powered off, causing the drive motor to generate a reverse electromotive force to further prevent the lawn mower from slipping.

FIG. 7 to FIG. 12 show implementations of a lawn mower with multiple safety protections according to the present disclosure. The lawn mower with multiple safety protections includes a dynamic detection unit 1, a distance detection unit 2, and a protection unit 3. The dynamic detection unit 1 is arranged on the front side of the lawn mower and is configured to detect dynamic obstacles in front of the lawn mower. Multiple distance detection units 2 are provided, and the multiple distance detection units 2 are arranged on the front side, left side, and/or right side of the lawn mower, and are configured to detect a distance between the lawn mower and the obstacles. Multiple protection units 3 are provided, and the multiple protection units 3 are arranged on the front side, left side, and/or right side of the lawn mower, and are configured to protect the lawn mower.

In the present disclosure, the dynamic detection unit 1 detects dynamic obstacles in front of the lawn mower. Multiple distance detection units 2 detect the distance between the front side, left side, and/or right side of the lawn mower and the obstacles. The lawn mower avoids dynamic obstacles and static obstacles according to the real-time detection results of the dynamic detection unit 1 and the distance detection unit 2, achieving dual safety protection for the lawn mower. At the same time, multiple protection units 3 are provided on the front side, left side, and/or right side of the lawn mower. When the lawn mower accidentally collides due to failure to detect obstacles, the protection units provide a third level of safety protection for the lawn mower.

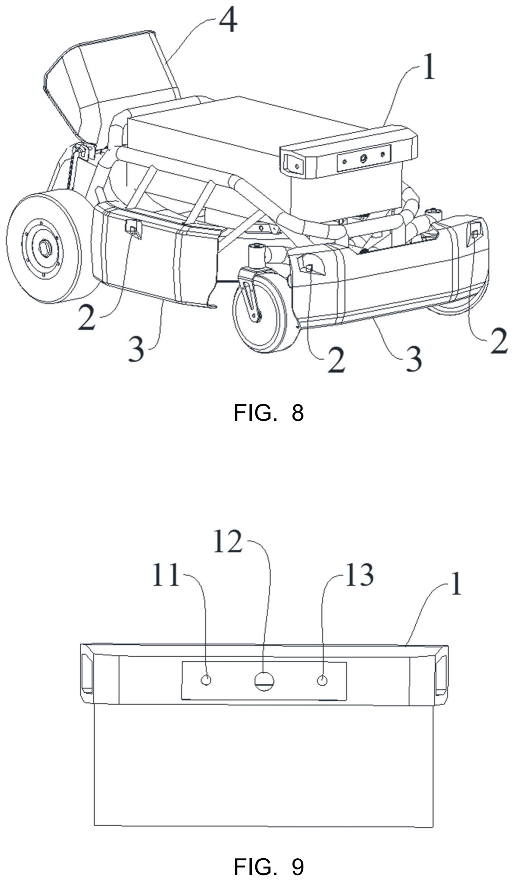

In some implementations, as shown in FIG. 9, the dynamic detection unit 1 includes a first imaging module 11, a second imaging module 12, and a third imaging module 13. The second imaging module 12 is arranged in the middle of the front side of the lawn mower and is configured to detect dynamic obstacles. The first imaging module 11 and the third imaging module 13 are arranged on two sides of the second imaging module 12 and are configured to capture images of the front side of the lawn mower. The second imaging module 12 is a combination of a camera and a dynamic vision sensor or infrared sensor. The camera can be a wide-angle camera or a telephoto camera, etc. The camera is configured to capture images, and the dynamic vision sensor or infrared sensor is configured to detect dynamic obstacles. After the second imaging module 12 detects a dynamic obstacle, it sends a signal to the lawn mower, and the lawn mower avoids the dynamic obstacle. The second imaging module 12 can capture dynamic obstacles coming from multiple directions, enabling the lawn mower to avoid dynamic obstacles from different directions in a timely manner. The first imaging module 11 and the third imaging module 13 can be wide-angle cameras, telephoto cameras, macro cameras, or a combination of the above cameras, as long as they can capture clear images of the front side of the lawn mower. The first imaging module 11 and the third imaging module 13 simultaneously monitor the front side of the lawn mower, covering a larger monitoring range and obtaining all-around images of the front side of the lawn mower.

The dynamic detection unit 1 can detect dynamic obstacles, and static obstacles are detected by the distance detection unit 2. The distance detection unit 2 detects the distance between the lawn mower and static obstacles and feeds the signal back to the lawn mower, which then avoids the static obstacles, further improving the safety protection of the lawn mower.

The distance detection unit 2 can be a lidar or a millimeter-wave radar. Lidar detects by emitting light beams, but the detection range is narrow, and it cannot function properly when the light beam is blocked.

In some implementations, the distance detection unit 2 is a millimeter-wave radar. Two millimeter-wave radars are arranged on two sides of the front side of the lawn mower. One millimeter-wave radar is arranged on the left side of the lawn mower, and one millimeter-wave radar is arranged on the right side of the lawn mower. The distance detection unit 2 detects in real time the distance between the front side, left side, and right side of the lawn mower and the obstacles. The lawn mower avoids obstacles according to the detection data of the distance detection unit 2.

The millimeter-wave radar can be directly arranged on the frame of the lawn mower. When arranged on the frame, it is inconvenient to adjust the position and angle of the millimeter-wave radar, which reduces the detection range.

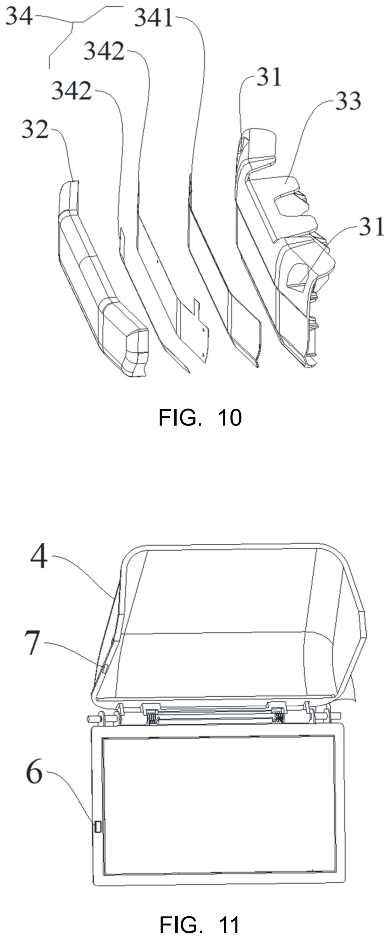

In some implementations, as shown in FIG. 10, three protection units 3 are provided and are arranged on the front side, left side, and right side of the lawn mower. A mounting groove 31 corresponding to the millimeter-wave radar is provided on the protection unit 3. The mounting groove 31 is configured to arrange the millimeter-wave radar. The millimeter-wave radar is installed in the mounting groove 31 at a suitable angle by means of double-sided adhesive.

The installation height of the millimeter-wave radar cannot be too high or too low, and the inclination angle cannot be set arbitrarily. The installation height and inclination angle of the millimeter-wave radar must be reasonably adjusted to achieve better detection results and a larger detection range, thereby providing better protection for the lawn mower.

In some implementations, the height of the millimeter-wave radar from the ground is 20 cm to 25 cm (both inclusive). The two millimeter-wave radars on the front side are raised by 5° to 20° (both inclusive) towards an upward direction in the middle of the lawn mower. The millimeter-wave radars on the left and right sides are inclined by 10° to 30° (both inclusive) towards the front side of the lawn mower. In this implementation, the height of the millimeter-wave radar from the ground is 23 cm. The two millimeter-wave radars on the front side are raised by 15° towards an upward direction in the middle of the lawn mower. The millimeter-wave radars on the left and right sides are inclined by 20° towards the front side of the lawn mower. The reasonable setting of the angle and height reduces detection blind spots, maximizes the coverage area of the radar, improves the detection effect of the millimeter-wave radar, and increases the detection range of the millimeter-wave radar.

By providing multiple distance detection units 2 on two sides of the front side, the left side, and the right side of the lawn mower, detection of static obstacles on the front side, left side, and right side of the lawn mower is achieved. On the basis of the dynamic detection unit 1, the distance detection unit 2 is further added, enabling the lawn mower to avoid both dynamic and static obstacles, providing dual safety protection.

When the dynamic detection unit 1 and the distance detection unit 2 do not detect obstacles, and the lawn mower collides with an obstacle, the lawn mower still has a third level of safety protection. The third level of safety protection is the protection units 3 provided on the front side, left side, and right side of the lawn mower.

In some implementations, as shown in FIG. 10, the protection unit 3 includes a flexible shell 32 and a supporting shell 33. The supporting shell 33 is arranged on the lawn mower, and the flexible shell 32 is arranged on the supporting shell 33. The flexible shell 32 is configured to cushion the impact force of a collision between the lawn mower and the obstacle. The flexible shell 32 can be made of rubber, foam, or other flexible materials. When the lawn mower collides with an obstacle, the flexible shell 32 first contacts the obstacle and cushions the impact force, thereby protecting the lawn mower and preventing it from being damaged.

The protection unit 3 further includes a pressure detection assembly 34. The pressure detection assembly 34 is arranged between the flexible shell 32 and the supporting shell 33 and is configured to detect the impact force of the collision between the lawn mower and the obstacle.

In some implementations, as shown in FIG. 10, the pressure detection assembly 34 includes a backplate 341 and at least one pressure sensing unit 342. The backplate 341 is arranged on the outer side of the supporting shell 33 and is locked to the supporting shell 33 by screws. The pressure sensing unit 342 is arranged on an outer side of the backplate 341, and the flexible shell 32 covers an outer side of the pressure sensing unit 342. During a collision, the obstacle first contacts the flexible shell 32, providing a cushioning effect and preventing direct damage to the pressure sensing unit 342 arranged inside the flexible shell 32. The backplate 341 provides support for the pressure sensing unit 342. The pressure sensing unit 342 is clamped between the flexible shell 32 and the backplate 341 to detect the impact force during a collision.

When only one pressure sensing unit 342 is provided, the coverage area of the pressure sensing unit 342 is small, resulting in a poor detection effect. When the impact force comes from different directions, the detection sensitivity and accuracy of a single pressure sensing unit 342 are low. The pressure sensing unit 342 can be a film pressure sensor or other types of pressure sensors, as long as it can detect the impact force during a collision.

In some implementations, the pressure sensing unit 342 is a film pressure sensor. The film pressure sensor is shaped to fit the backplate 341 and is fixed to the backplate 341 by means of double-sided adhesive. The film pressure sensor is made of flexible material and can be bent and folded, allowing it to better fit the backplate 341 and improve detection accuracy.

Two film pressure sensors are provided. One film pressure sensor is arranged at a protruding middle part of the backplate 341, and the other film pressure sensor is arranged at a recessed lower part of the backplate 341. The two film pressure sensors respectively detect the impact force on the middle and lower parts of the protection unit 3, resulting in more accurate detection data.

When the lawn mower collides with an obstacle, the flexible shell 32 cushions the impact force, reducing damage to the lawn mower. The pressure detection assembly 34 detects the impact force of the collision, facilitating subsequent analysis of the collision results.

During the mowing process, the grass discharge port cover 4 or the grass collection box 5 on the rear side of the lawn mower is in a closed state, facilitating grass discharge by the lawn mower. When the grass discharge port cover 4 or the grass collection box 5 on the rear side of the lawn mower is open, grass will be directly discharged to the rear of the lawn mower, and flying debris may injure the operator. Therefore, it is necessary to detect the opening or closing of the grass discharge port cover 4 or the grass collection box 5 on the rear side of the lawn mower.

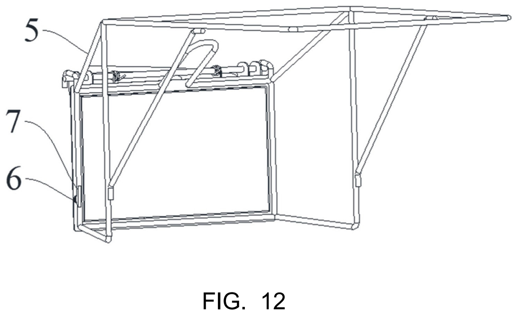

In some implementations, as shown in FIG. 11 and FIG. 12, a contact switch 6 is provided on the rear side of the lawn mower. The contact switch 6 is configured to detect the opening or closing of the grass discharge port cover 4 or the grass collection box 5 on the rear side of the lawn mower.

In some implementations, the contact switch 6 is a Hall switch. When the grass discharge port cover 4 is installed on the rear side of the lawn mower, a magnetic component 7 corresponding to the Hall switch is provided on the grass discharge port cover 4. When the grass discharge port cover 4 is closed, the magnetic component 7 is close to the Hall switch. When the grass discharge port cover 4 is open, the magnetic component 7 is far from the Hall switch. The proximity or distance of the magnetic component 7 to the Hall switch changes the voltage of the Hall switch, thereby determining the opening or closing of the grass discharge port cover 4.

When the contact switch 6 detects that the grass discharge port cover 4 is open, the lawn mower stops mowing to prevent flying debris from injuring the operator and improve the safety of the lawn mower.

When the grass collection box 5 is installed on the rear side of the lawn mower, a magnetic component 7 corresponding to the Hall switch is provided on the grass collection box 5. When the grass collection box 5 is closed, the magnetic component 7 is far from the Hall switch. The proximity or distance of the magnetic component 7 to the Hall switch changes the voltage of the Hall switch, thereby determining the opening or closing of the grass collection box 5. When the contact switch 6 detects that the grass collection box 5 is open, the lawn mower stops mowing to prevent flying debris from injuring the operator and improve the safety of the lawn mower.

It can be seen that the present disclosure discloses a lawn mower with multiple safety protections. The dynamic detection unit detects dynamic obstacles in front of the lawn mower. Multiple distance detection units detect the distance between the front side, left side, and right side of the lawn mower and obstacles. The lawn mower avoids dynamic obstacles and static obstacles according to the real-time detection results of the dynamic detection unit and the distance detection unit, achieving dual safety protection for the lawn mower. At the same time, multiple protection units are provided on the front side, left side, and right side of the lawn mower. When the lawn mower accidentally collides due to failure to detect obstacles, the protection units provide a third level of safety protection for the lawn mower.

The above are only implementations of the present disclosure and do not limit the scope of the present disclosure. Any equivalent structural changes made using the content of the specification and drawings of the present disclosure, or direct or indirect application in other related technical fields, are also included within the scope of protection of the present disclosure.

## Claims

1. An anti-slip device for a lawn mower, comprising a fixed bracket, a telescopic member, an electromagnetic member, and an elastic member, wherein:
the fixed bracket is configured to connect to a frame of the lawn mower, and an end of the fixed bracket adjacent to a wheel hub of the lawn mower is provided with a perforation;
the telescopic member is arranged within the perforation, the electromagnetic member is arranged inside the fixed bracket, and the elastic member is arranged between the telescopic member and the electromagnetic member;
the electromagnetic member is configured to drive the telescopic member to retract along the perforation relative to the fixed bracket;
the elastic member is configured to drive the telescopic member to extend along the perforation relative to the fixed bracket; and
when the telescopic member extends, a resisting end of the telescopic member presses against the wheel hub to prevent slipping.

2. The anti-slip device for a lawn mower according to claim 1, wherein:
the electromagnetic member is connected to a drive motor of the lawn mower;
the electromagnetic member is powered on and off simultaneously with the drive motor;
when the electromagnetic member is powered on, the telescopic member retracts; and
when the electromagnetic member is powered off, the telescopic member extends.

3. The anti-slip device for a lawn mower according to claim 2, wherein:
a rotating disk is provided on the wheel hub; and
when the telescopic member extends, the resisting end resists the rotating disk to prevent slipping.

4. The anti-slip device for a lawn mower according to claim 3, wherein an end surface of the rotating disk adjacent to the telescopic member is a rough surface.

5. The anti-slip device for a lawn mower according to claim 3, wherein:
a connecting member is provided on an end surface of the rotating disk adjacent to the telescopic member;
the connecting member is provided with a groove or through-hole adapted to the resisting end; and
when the telescopic member extends, the resisting end resists within the groove or through-hole to prevent slipping.

6. The anti-slip device for a lawn mower according to claim 5, wherein multiple connecting members are provided and uniformly and distributed at intervals on the rotating disk.

7. The anti-slip device for a lawn mower according to claim 3, wherein multiple grooves or through-holes are provided at intervals on an end surface of the rotating disk adjacent to the telescopic member, and when the telescopic member extends, the resisting end resists within a groove or a through-hole to prevent slipping.

8. The anti-slip device for a lawn mower according to claim 1, wherein:
the fixed bracket comprises an extending sub-frame and a receiving sub-frame;
the receiving sub-frame is arranged at an outer end of the extending sub-frame;
the extending sub-frame is configured to connect to the frame of the lawn mower and extend a position of the receiving sub-frame; and
the receiving sub-frame is configured to arrange the telescopic member, the elastic member, and the electromagnetic member.

9. The anti-slip device for a lawn mower according to claim 2, wherein:
the lawn mower comprises an electronic control board;
the electronic control board is configured to connect multiple phase wires of the drive motor;
a switch is connected between adjacent phase wires; and
the switch is configured to short-circuit the phase wires, causing the drive motor to generate a reverse electromotive force to prevent slipping.

10. A lawn mower, comprising the anti-slip device for a lawn mower according to any of claims 1 to 9.

11. A lawn mower with a plurality of safety protections, comprising a dynamic detection unit, a distance detection unit, and a protection unit, wherein:
the dynamic detection unit is arranged on a front side of the lawn mower and is configured to detect a dynamic obstacle in front of the lawn mower;
a plurality of distance detection units are provided and arranged on the front side, a left side, and/or a right side of the lawn mower and are configured to detect a distance between the lawn mower and the obstacles; and
a plurality of protection units are provided and arranged on the front side, left side, and/or right side of the lawn mower and are configured to protect the lawn mower.

12. The lawn mower with multiple safety protections according to claim 11, wherein:
the protection unit comprises a flexible shell and a supporting shell;
the supporting shell is arranged on the lawn mower;
the flexible shell is arranged on the supporting shell; and
the flexible shell is configured to cushion an impact force of a collision between the lawn mower and the obstacle.

13. The lawn mower with multiple safety protections according to claim 12, wherein:
the protection unit further comprises a pressure detection assembly;
the pressure detection assembly is arranged between the flexible shell; and
the supporting shell and is configured to detect the impact force of the collision between the lawn mower and the obstacle.

14. The lawn mower with multiple safety protections according to claim 13, wherein:
the pressure detection assembly comprises a backplate and at least one pressure sensing unit;
the backplate is arranged on an outer side of the supporting shell;
the pressure sensing unit is arranged on an outer side of the backplate; and
the flexible shell covers an outer side of the pressure sensing unit.

15. The lawn mower with multiple safety protections according to claim 14, wherein:
the pressure sensing unit is a film pressure sensor;
the film pressure sensor is shaped to fit the backplate; and
two film pressure sensors are provided, one film pressure sensor is arranged at a protruding middle part of the backplate, and the other film pressure sensor is arranged at a recessed lower part of the backplate.

16. The lawn mower with multiple safety protections according to claim 11, wherein:
the dynamic detection unit comprises a first imaging module, a second imaging module, and a third imaging module;
the second imaging module is arranged in the middle of the front side of the lawn mower and is configured to detect the dynamic obstacle; and
the first imaging module and the third imaging module are arranged on two sides of the second imaging module and are configured to capture images of the front side of the lawn mower.

17. The lawn mower with multiple safety protections according to claim 11, wherein:
the distance detection unit is a millimeter-wave radar, two millimeter-wave radars are arranged on two sides of the front side of the lawn mower, one millimeter-wave radar is arranged on the left side of the lawn mower, and one millimeter-wave radar is arranged on the right side of the lawn mower; and
three protection units are provided and are arranged on the front side, left side, and right side of the lawn mower, a mounting groove corresponding to the millimeter-wave radar is provided on the protection unit, and the mounting groove is configured to arrange the millimeter-wave radar.

18. The lawn mower with multiple safety protections according to claim 17, wherein:
a height of the millimeter-wave radar from the ground is 20 cm to 25 cm (both inclusive);
the two millimeter-wave radars on the front side are raised by 5° to 20° (both inclusive) towards an upward direction in the middle of the lawn mower; and
the millimeter-wave radars on the left and right sides are inclined by 10° to 30° (both inclusive) towards the front side of the lawn mower.

19. The lawn mower with multiple safety protections according to claim 11, wherein a contact switch is arranged on a rear side of the lawn mower, and the contact switch is configured to detect an opening or closing of a grass discharge port cover or a grass collection box on the rear side of the lawn mower.

20. The lawn mower with multiple safety protections according to claim 19, wherein the contact switch is a Hall switch, and a magnetic component corresponding to the Hall switch is arranged on the grass discharge port cover and/or the grass collection box.
